# EUROPEAN PATENT APPLICATION

(11) **EP 3 943 626 A1**
(43) Date of publication of application: **26.01.2022**
(21) Application number: 20772851.0
(22) Date of filing: 10.03.2020
(51) Int. Cl.: C22C 14/00, F16C 17/10, F16C 33/12, F16C 33/20, C23C 8/16

(54) **SLIDING BEARING MADE OF TITANIUM ALLOY**

(30) Priority: 18.03.2019 JP 2019049793
(71) Applicant: NTN Corporation, Osaka-shi, Osaka 550-0003 (JP)
(72) Inventor: DAN Takeshi, Kuwana-shi, Mie 511-8678 (JP)
(74) Representative: Grünecker Patent- und Rechtsanwälte PartG mbB
(86) International application number: PCT/JP2020/010239
(87) International publication number: WO 2020/189402

(57) **Abstract**

A titanium alloy spherical sliding bearing (A) includes an inner ring (1) made of an α+β or α type titanium alloy, and having a convex spherical sliding surface region (2) on the outer periphery of the inner ring (1). The bearing (A) further includes an outer ring (4) in sliding contact with the sliding surface region (2) via a lubricative liner (3). The sliding surface region (2) contains primary and secondary α crystal grains, and includes an oxygen diffusion layer (5) of which the oxygen concentration is not less than 0.8% by mass, and the hardness of the surface is not less than 550 Hv, and the oxygen concentration continuously decreases with depth from the surface of the sliding surface region.

## Description

### TECHNICAL FIELD

This invention relates to sliding bearings, and particularly a titanium alloy sliding bearing which can be used in the aerospace field or similar fields, where durability as well as lightness in weight is particularly important.

### BACKGROUND ART

Instruments and devices used in satellites and rockets are ordinarily required to be as lightweight as possible in order to, e.g., reduce fuel consumption during transportation.

Titanium alloys are well-known materials which can be used for mechanical structural members for reduced weight, instead of ordinarily used materials such as steel.

While titanium alloys are lightweight, and also high in corrosion resistance and strength-to-weight ratio, they are low in hardness compared to steel, and thus low in wear resistance.

As one way to improve the hardness of a titanium alloy, a processing method is known for increasing the hardness of a titanium alloy used for ornamental goods by holding a member in a mixed atmosphere gas containing mainly nitrogen and a trace amount of oxygen, for a predetermined period of time at an elevated temperature, thereby forming a solid solution of mainly nitrogen and oxygen on the surface of the member (below-identified Patent Document 1).

Also known is a spherical sliding bearing having, on at least one of the inner ring and the outer ring of a spherical sliding bearing made of a titanium alloy, a hardened surface formed by depositing titanium nitrate by means of physical vapor deposition (PVD) (below-identified Patent Document 2).

### PRIOR ART DOCUMENTS

### PATENT DOCUMENTS

Patent Document 1: International Publication No. 97/36018
Patent Document 2: JP Patent Publication 2007-255712A

### SUMMARY OF THE INVENTION

### OBJECT OF THE INVENTION

However, while the above-described surface modification method, in which nitrogen and a trace amount of oxygen are mixed into the titanium alloy to form a solid solution, improves hardness, toughness remains low and does not improve.

In other words, the hardened solid-solution layer formed by adding 0.6 to 8.0% by weight of nitrogen and 0.5 to 14.0% by weight of oxygen to the surface of the titanium alloy is brittle, although the hardness is increased by nitrogen and oxygen. If a large load is applied to the inner ring or outer ring of a titanium alloy sliding bearing having such a hardened layer, cracking may occur. In addition, the solid solution of oxygen in such a surface modification method coarsens the crystal grains of the titanium alloy, resulting in a decrease in fatigue strength.

Moreover, if the hardened layer of titanium nitride is formed by vapor deposition, the hardened layer of titanium nitride could delaminate when the titanium alloy is slid at a high sliding speed under a large load.

Therefore, an object of this invention is to solve the above-described problems associated with the modification treatment to harden the surface of a titanium alloy sliding bearing, and to provide a titanium alloy sliding bearing of which the hardness of the sliding surface while ensuring the toughness of the sliding surface and suppressing a decrease in fatigue strength.

### MEANS FOR ACHIEVING THE OBJECT.

In order to achieve the above object, the present invention provides a titanium sliding bearing made of a titanium alloy and having a sliding surface region formed of an α+β or α type titanium alloy, wherein the sliding surface region contains primary and secondary α crystal grains, and includes an oxygen diffusion layer in which the oxygen concentration continuously decreases with depth from a surface of the sliding surface region, wherein the surface is composed of a solid solution of oxygen of which the oxygen concentration is not less than 0.8% by mass, and the hardness of the surface is not less than 550 Hv.

The titanium alloy sliding bearing of this invention, configured as described above, includes a sliding surface region having a surface strengthened and hardened to a hardness of not less than 0.8% by mass by the oxygen diffusion layer formed by mixing not less than 0.8% by mass of oxygen to the surface to form a solid solution.

The sliding surface region made of an α+β or α type titanium alloy contain, besides primary α crystal grains, secondary α crystal grains that are finer than the primary α crystal grains, and the finer grain size improves fatigue strength and ensures sufficient toughness at the sliding surfaces for sliding bearings.

In this way, the fatigue strength of the titanium alloy sliding bearing is improved by the finer crystal grain size, and the hardness of the sliding surface region is improved by providing the oxygen diffusion layer.

The oxygen diffusion layer is provided on the sliding surface region made of titanium alloy in a state where the oxygen concentration decreases continuously with depth from the surface, so that it is integrated with the inside of the titanium alloy with good adhesiveness and is difficult to peel off, and it does not reduce the fatigue strength that has been improved by the refinement of the crystal grain size. In other words, the oxygen diffusion layer improves the strength, hardness, corrosion resistance, and wear resistance of the surface of the titanium alloy, and does not reduce the fatigue strength of the entire titanium alloy.

In order to increase the tensile strength, creep strength, etc. as much as possible, it is desirable for the above titanium alloy to contain aluminum element (Al), which is a stabilizing element of the α phase, to some extent (not more than 7% by mass), for example, Ti-6Al-4V titanium alloy, which contains 6% by mass of aluminum element (Al) and 4% by mass of vanadium (V).

The average grain size of all crystal grains having a fine secondary α phase compounded with oxygen atoms should be not more than 15 µm to increase fatigue strength. This average grain size is obtained as follows: (1) in an observation image of EBSD measurement of the surface of the sliding surface region, the average of the grain sizes of the crystal grains over the entire EBSD image of which, assuming that differences in crystallographic orientations of not less than 15° are crystal grain boundaries, the areas are added, one at a time, from the largest area in descending order, until the sum of the added areas reaches 70% of the total area of the entire crystal grains in the EBSD image; and (2) the average grain size of the crystal grains whose areas are added is calculated.

Sliding bearings to which the invention can be applied include, for example, a spherical sliding bearing, which can be configured as a titanium alloy spherical bearing in which the inner ring and outer ring are in sliding contact via a lubricative liner.

The lubricative liner is preferably a resin molded body or a resin woven fabric so that the titanium alloy sliding bearing can be used in low-pressure or vacuum environments, such as in aerospace equipment, as well as in cryogenic environments and environments with large temperature variations.

If the lubricative liner is a resin molded body, it is preferred to employ a molded body of one or more resins selected from polytetrafluoroethylene, polyamide, polyimide, and polyphenylene sulfide, in order to make the titanium alloy sliding bearing resistant to use in the above specific environments.

Similarly, when the above lubricative liner is a liner formed of a woven fabric, it is preferred that the liner be a woven fabric made of one or more fibers selected from polytetrafluoroethylene fibers, aromatic polyamide fibers, glass fibers, and polyester fibers, in order for the titanium alloy sliding bearing to withstand use in the above specified environment.

The above-described titanium alloy sliding bearing is suitable as a titanium alloy sliding bearing used in aerospace devices and instruments.

### ADVANTAGES OF THE INVENTION

Because the titanium alloy sliding bearing of the present invention includes a sliding surface region containing primary and secondary α crystal grains, and in which the fatigue strength is improved as the crystal grain size becomes finer, and the hardness of the sliding surface region with the oxygen diffusion layer is improved, the toughness of the sliding surface region is secured, while the hardness of the sliding surface region is increased and the fatigue strength is reduced.

### BRIEF DESCRIPTION OF THE DRAWINGS

Fig. 1 is a cross-sectional view of a titanium alloy spherical sliding bearing of a first embodiment.
Fig. 2 is a cross-sectional view of a titanium alloy spherical sliding bearing of a second embodiment.
Fig. 3 is a cross-sectional view of a titanium alloy sliding bearing of a third embodiment.
Fig. 4 is a graph showing the relationship between the depth from the surface of an inner ring material of the example, and the hardness (Hv).
Fig. 5 is a graph showing the relationship between the depth from the surface of the inner ring material of the example, and the oxygen concentration.
Fig. 6 is a substitute photograph of an image used for EBSD measurement of the surface of the inner ring material in the example.

### EMBODIMENTS

The embodiments of the invention are described below with reference to the accompanying drawings.

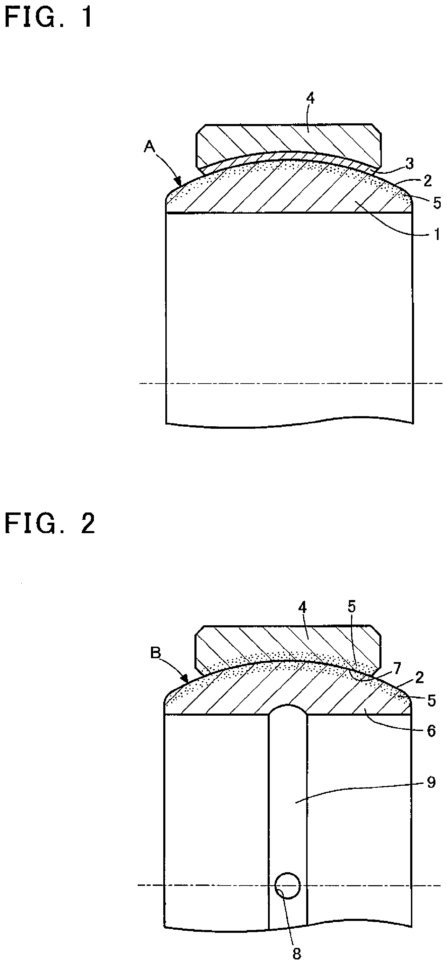

As shown in Fig. 1, the first embodiment is a lubrication-free titanium alloy spherical sliding bearing A. It is composed of a titanium alloy inner ring 1 having a convex spherical sliding surface region 2 on its outer periphery, and an outer ring 4 having a concave spherical inner periphery which is in sliding contact with the sliding surface region 2 via a lubricative liner 3.

The sliding surface region 2 of the inner ring 1, which is in contact with the lubricative liner 3, contains primary and secondary α crystal grains, and includes an oxygen diffusion layer 5 in which the oxygen concentration decreases continuously with depth from the surface of the sliding surface region 2.

The inner ring 1 is formed of a titanium alloy of the α+β or β type. The sliding surface region (surface) 2 is composed of a solid solution of oxygen of which the oxygen concentration is not less than 0.8% by mass, and the hardness of the sliding surface region (surface) 2 is not less than 550 Hv.

The lubricative liner 3 is a molded member or a woven fabric made of resin or fiber having self-lubricating properties, or a composite material thereof, and is retained by the outer ring 4 by being integrated with the outer ring 4. If the lubricative liner 3 is a resin liner, it is mainly composed of a resin such as polytetrafluoroethylene, polyamide, polyimide, or polyphenylene sulfide, and is molded into an annular shape with spherical radially inner and outer surfaces by injection molding or any other well-known molding method. If the lubricative liner 3 is a woven fabric, it is made of a fiber material such as polytetrafluoroethylene fiber, aromatic polyamide fiber, glass fiber or polyester fiber, and is bonded to the inner peripheral surface of the outer ring 4 with a predetermined adhesive.

The titanium alloy sliding bearing of this invention can be used as a sliding bearing in a well-known form. For example, the second embodiment shown in Fig. 2 is a spherical sliding bearing B of the oil-feed type including a titanium alloy inner ring 6 having a convex spherical sliding surface region 2 on the outer periphery thereof, and a titanium alloy outer ring 4 with a concave spherical inner periphery defining a sliding surface region 7 opposed to and in sliding contact with the sliding surface region 2. These pair of sliding surface regions 2 and 7 both contain primary α crystal grains and secondary α crystal grains forming the oxygen diffusion layers 5. Numeral 8 in the figure designates an oil supply hole leading to the sliding surface region 2, and numeral 9 designates an oil groove.

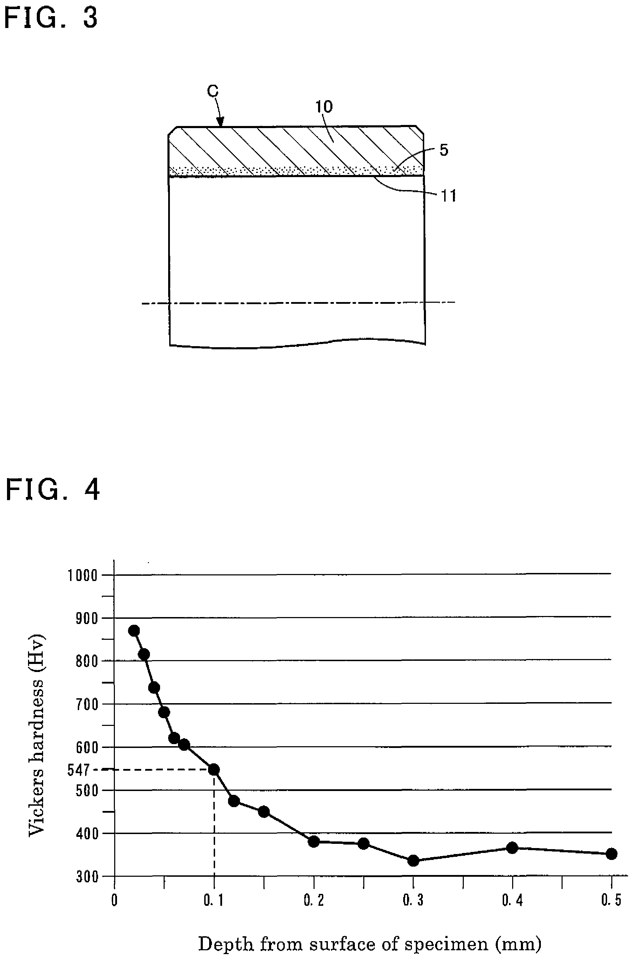

In the third embodiment shown in Fig. 3, which is a sleeve-type sliding bearing C comprising a cylindrical sleeve 10 made of a titanium alloy and having the sliding surface region 11 formed on the inner peripheral surface of the cylindrical sleeve 10, and containing primary and secondary α crystal grains. The cylindrical sleeve 10 also has the oxygen diffusion layer 5.

In any of the above embodiments, the titanium alloy that forms the sliding surface region or regions is an α+β or α type titanium alloy.

Examples of α+β type titanium alloys include Ti-6Al-4V and Ti-6Al-2Sn-4Zr-6Mo, and examples of α type titanium alloys include Ti-5Al-2.5Sn and Ti-8Al-1Mo-1V.

The sliding surface region(s) of any of the titanium alloy sliding bearings described above is ultimately strengthened by increasing the surface hardness by mixing oxygen into the α+β or α type titanium alloy, thereby forming a solid solution during an oxygen diffusion treatment step. The titanium alloy on the surface forming a solid solution of oxygen contains multiple α crystal grains.

α crystal grains refer to crystal grains composed of an α phase. α crystal grains include primary α crystal grains and secondary α crystal grains. Primary α crystal grains are crystal grains composed of a primary α phase. The secondary α crystal grains are grains composed of a secondary α phase.

The primary α phase is an α phase that remains without transformation to the β phase during any of the below-described solution treatment step, aging treatment step, and oxygen diffusion treatment step.

The secondary α phase is a phase formed by martensitic or massive transformation during cooling after the transformation to the β phase. The secondary α phase is classified into an α' type, which has an hcp structure and an α" type, which has an orthorhombic structure.

The primary and secondary α crystal grains can be distinguished by their shape. The primary α grain has an elliptical shape, while the secondary α grain has a needle-like shape.

Each α grain can be identified by its crystallographic orientation. More specifically, if the deviation between the crystallographic orientations of two adjacent α crystalline phases is less than 15°, then those α crystalline phases are considered to be one α crystalline grain.

On the other hand, if the deviation between the crystallographic orientations of two adjacent α crystalline phases is not less than 15°, then those α crystalline phases are considered to be separate α crystalline grains.

Measurement of the crystallographic orientations (identification of the respective α crystal grain boundaries) is made using electron backscatter diffraction (EBSD).

When, using this method, the sizes of the α crystal grains contained in the titanium alloy on the surface of the sliding surface region according to the present invention are measured, the crystal grains are classified into a first group and a second group, and the minimum value of the grain sizes of the α crystal grains classified in the first group is larger than the maximum value of the grain sizes of the α crystal grains classified in the second group. The ratio of the total area of the α crystal grains classified in the first group, to the total area of the entire α crystal grains, is not less than 0.7. The ratio of the total area of the α crystal grains classified in the first group, except the α crystal grain smallest in grain size, to the total area of the entire α crystal grains, is less than 0.7.

To put it another way, the α crystal grains at the surface of the sliding surface region are classified, one at a time, from the one largest in grain size in descending order, into the first group, until the total area of the α crystal grains classified into the first group first exceeds 70% of the total area of the entire α crystal grains, and the remaining α crystal grains are classified into the second group.

The "α crystal grains at the surface" refer to α crystal grains present in the area from the surface of the sliding surface region to the depth of 250 µm. However, instead, the "α crystal grains at the surface" may be α crystal grains present in the area from the surface of the sliding surface region to the depth of 300 µm.

The average grain size of the α crystal grains classified in the first group is not more than 25 µm, preferably not more than 15 µm. The average grain size of the α crystal grains classified in the first group can be calculated from the equivalent circle diameters of the respective crystal grains.

From an observation image of the surface of the sliding surface region obtained by the EBSD, assuming that differences in crystallographic orientations of not less than 15° are crystal grain boundaries, the areas of the crystal grains over the entire observation image were added, one at a time, in descending order from the largest area, until the sum of the added areas reached 70% of the total area of the entire crystal grains in the image observed, and the average of the grain sizes of the crystal grains of which the areas were added was calculated. This average is not more than 15 µm.

The titanium alloy contains, at the surface thereof, not less than 0.8% by mass of oxygen (O), preferably not less than 1.4% by mass of oxygen, further preferably not less than 1.8% mass of oxygen. The oxygen concentration in the titanium alloy is measured with an electron probe micro analyzer (EPMA).

The method of manufacturing the titanium alloy sliding bearing containing, as described above, primary α crystal grains and secondary α crystal grains at the sliding surface region, includes the below-described preparation step, solution treatment step, aging treatment step, oxygen diffusion treatment step, and post-treatment step.

During the preparation step, an inner ring or an outer ring having a sliding surface region composed of an α+β type titanium alloy or an α type titanium alloy is cut to a shape and dimensions close to those of the end product.

During the solution treatment step, the inner ring or outer ring that has been roughly formed into the shape of the end product in the preparation step is heated and held, in a furnace, at a predetermined temperature for a predetermined period of time.

During this step, as an inert gas such as argon is introduced into the furnace under normal pressure. The inert gas introduced may be instead helium, which is a noble gas, or nitrogen gas.

The solution treatment step includes two essential sub-steps, i.e., a holding sub-step and a cooling sub-step.

During the holding sub-step, a member to be treated is held, in the furnace, at a predetermined holding temperature (hereinafter referred to as the "first temperature") for a predetermined period of time (hereinafter referred to as the "first period of time").

During the solution treatment, the α phase in the titanium alloy constituting the member to be treated partially transforms into the β phase.

The above first temperature is lower than the temperature at which the α phase in the titanium alloy constituting the member to be treated entirely transforms into the β phase.

The cooling sub-step is carried out after the holding sub-step. During the cooling sub-step, the member to be treated that has been processed in the holding sub-step is cooled. As a result of cooling, the α phase that has been transformed into the 6 phase transforms into the secondary α phase.

The aging treatment step is carried out after the solution treatment step for the purpose of separating secondary α crystal grains, which are finer than primary α crystal grains.

During the aging treatment step, the member to be treated is held at a predetermined temperature (this temperature is hereinafter referred to as the "second temperature") for a predetermined period of time (hereinafter referred to as the "second period of time"), and the member is then cooled. During the aging treatment step, fine secondary α crystal grains separate from the β phase that has not transformed into the α phase during the cooling sub-step.

During heating and holding, an inert gas such as argon, helium, which is a noble gas, nitrogen gas, or the like, is introduced into the furnace under normal pressure.

During the oxygen diffusion treatment step, which is carried out after the solution treatment step and the aging step, oxygen diffusion treatment is carried out in order to form an oxygen diffusion layer having high hardness.

The oxygen diffusion treatment step is carried out by holding the member to be treated at a predetermined holding temperature (hereinafter referred to as the "third temperature") for a predetermined period of time (hereinafter referred to as the "third period of time").

The oxygen diffusion treatment is carried out in an atmospheric gas containing carbon dioxide (CO₂). The atmospheric gas may further contain an inert gas. The inert gas is, for example, a noble gas such as argon (Ar) or helium (He). The inert gas may be instead nitrogen (N₂). The pressure of the atmospheric gas is preferably normal pressure (atmospheric pressure).

The above-described series of processing steps may be carried out on the entire surface of the member to be treated, such as an inner ring or an outer ring. If only the sliding surface is to be subjected to oxygen diffusion treatment, the member to be treated is partially masked in forming the oxygen diffusion layer.

The oxygen diffusion treatment is described in detail below:
An argon gas-based CO₂ gas is introduced into a furnace kept at normal pressure, and a member made of a titanium alloy is heated, held, and cooled in the furnace. When the titanium alloy is heated in the CO₂ gas atmosphere, CO₂ gas is decomposed into O and C at the surface of the titanium alloy member, and these elements diffuse into the titanium alloy from its surface. Because, compared with oxygen, the solid solution limit of carbon is low, carbon hardly affects the solid solution strengthening of the member to be treated.

During the post-treatment step, which is carried out after the oxygen diffusion treatment step, the member to be treated is subjected to machining such as turning and polishing to finish the member to specific dimensional accuracy, and a liner is, as needed, formed and bonded to the member, and other assembling and processing steps are carried out.

In particular, after the oxygen diffusion treatment step, a surface layer in the form of a compound layer composed of TiC, TiO₂ or TiO is formed on the titanium alloy. Because this compound layer is, though hard, brittle, it is removed by machining during the post-treatment step. Also, after the oxygen diffusion treatment, in order to finish the titanium alloy to specific dimensional accuracy, it is subjected to machining such as turning or polishing.

The surface of the sliding surface region of the inner ring formed by the above-described series of processing steps has an oxygen concentration of not less than about 0.8% by mass, and a hardness of about not less than 550 Hv. The surface of the sliding surface region is composed of crystal grains of which, in an observation image of the surface of the sliding surface region obtained by EBSD measurement, assuming that differences in crystallographic orientations of not less than 15° are crystal grain boundaries, and when the areas of the crystal grains over the entire observation image are added, one at a time, from the largest area in descending order, until the sum of the added areas reaches 70% of the total area of the entire crystal grains in the observation image, the average of the grain sizes of the crystal grains of which the areas are added is not more than 15 µm.

The above-described method of the embodiment for producing a titanium alloy sliding bearing having high specific hardness ensures sufficient fatigue strength by reducing the crystal grain sizes during the solution treatment and aging treatment steps, and also enables the provision of a high-hardness oxygen diffusion layer during the subsequent oxygen diffusion treatment step. Therefore, the sliding bearing thus formed has high hardness and excellent fatigue strength.

### EXAMPLE

The solution treatment and the aging treatment were performed on a material for an inner ring 1 of a spherical sliding bearing (Fig. 1), the material being Ti-6Al-4V, an α+β type titanium alloy under ASTM B348-13 GR.5.

The surface of the material (hereinafter referred to as the "specimen") for the inner ring was scraped off little by little to the depth of 0.5 mm, and the outer peripheral surface Vickers hardness (V) was measured at each of predetermined depths (mm) from the initial surface, up to the 0.5 mm depth. Fig. 4 shows the relationship between the respective depths (mm) from the initial surface and the hardness values Hv at the respective depths.

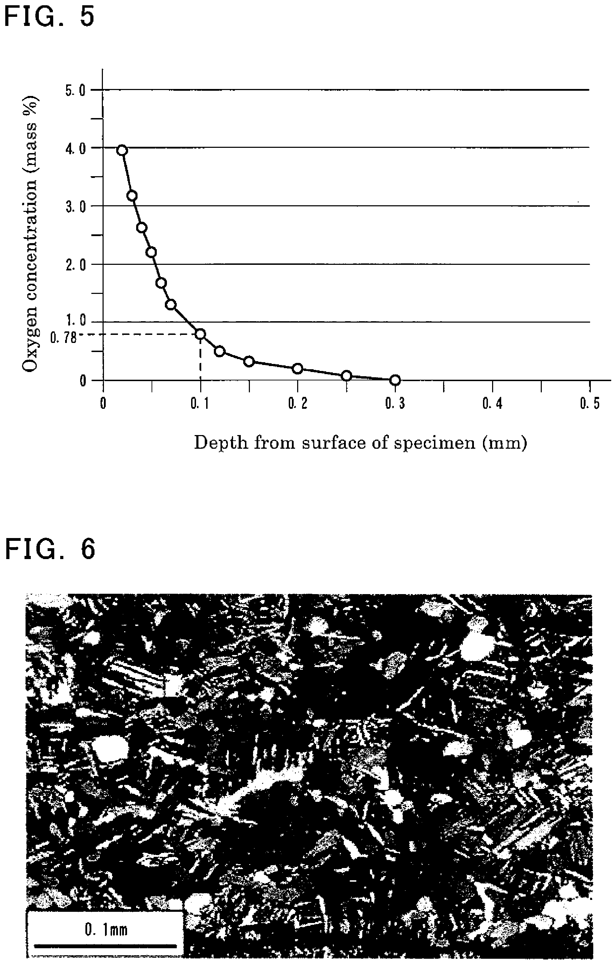

When measuring the Vickers hardness (HV), the oxygen concentration (% by mass) was measured by EPMA. Fig. 5 shows the relationship between the respective depths from the initial surface and the oxygen concentrations at the respective depths.
Figs. 4 and 5 show the hardness and oxygen concentration distributions for a specimen that is not subjected to the post-treatment step.

The spherical sliding bearing of the Example as an end product has the outer peripheral surface layer of the inner ring removed, by an arbitrarily determined amount, by machining during the post-treatment step. Thus, in the hardness and oxygen concentration distributions of the specimen shown in Figs. 4 and 5, the hardness and oxygen concentration at a position deeper than the removed amount are the hardness and the oxygen concentration of the actual sliding surface region (surface).

The machining after the oxygen diffusion treatment step is preferably performed so as to minimize the amount by which the oxygen diffusion layer or hardened layer is removed, and ordinarily, the removed amount is less than 0.10 mm. For reference, when the bearing sliding surface was formed by removing the material of the specimen by 0.10 mm from the surface, the hardness and oxygen concentration of the sliding surface region (surface) were, as shown, 547 Hv and 0.78% by mass, respectively.

Fig. 6 shows an EBSD image of the surface layer of the specimen when the bearing sliding region was formed by removing the material of the specimen by 0.10 mm from its surface.

As is apparent from the EBSD image of Fig. 6, the average grain size of the α crystal grains in the specimen measured was 10.1 µm. It was also confirmed that the secondary α crystal grains separated during the solution treatment and aging treatment were fine needle-like secondary α phases as appear in the EBSD image.

The above average grain size is the average of the grain sizes of the crystal grains over the entire EBSD image, of which, assuming that differences in crystallographic orientations of not less than 15° are crystal grain boundaries, the areas are added, one at a time, from the largest area in descending order, until the sum of the added areas reaches 70% of the total area of the entire crystal grains in the EBSD image.

For the thus-obtained spherical sliding bearing of the example, the α crystal grains including fine secondary α crystal grains have a sufficiently small average grain size, i.e., of 10.1 µm, and during the subsequent oxygen diffusion treatment, enough oxygen is mixed into the surface to form a solid solution. Thus, the hardness of the sliding surface region (surface) is about 550 Hv and the oxygen concentration thereof is about 0.8% by mass. Therefore, while the bearing is made of a lightweight titanium alloy, it has sufficient fatigue resistance as well as wear resistance. The bearing is therefore applicable in an environment where durability and strength are required.

### INDUSTRIAL APPLICABILITY

The sliding bearing according to the present invention can be used for general applications where lightness in weight, durability and strength are required, such as in the aerospace field, and also can be used in an environment where the bearing is pivoted while sliding, or rotated in one direction.

### DESCRIPTION OF THE NUMERALS

- 1, 6.: Inner ring
- 2, 7, 11.: Sliding surface region
- 3.: Lubricative liner
- 4.: Outer ring
- 5.: Oxygen diffusion layer
- 8.: Oil supply hole
- 9.: Oil groove
- 10.: Sleeve
- A, B.: Spherical sliding bearing
- C.: Sleeve type sliding bearing

## Claims

1. A titanium sliding bearing made of a titanium alloy and having a sliding surface region formed of an α+β or α type titanium alloy, wherein the sliding surface region contains primary and secondary α crystal grains, and includes an oxygen diffusion layer in which the oxygen concentration continuously decreases with depth from a surface of the sliding surface region, wherein the surface is composed of a solid solution of oxygen of which the oxygen concentration is not less than 0.8% by mass, and the surface has a hardness of not less than 550 Hv.

2. The titanium alloy sliding bearing of claim 1, wherein the titanium alloy is Ti-6Al-4V titanium alloy.

3. The titanium alloy sliding bearing of claim 1 or 2, wherein the surface of the sliding surface region is composed of crystal grains of which, in an observation image of the surface of the sliding surface region obtained by EBSD measurement, assuming that differences in crystallographic orientations of not less than 15° are crystal grain boundaries, and when the areas of the crystal grains over the entire observation image were added, one at a time, from the largest area in descending order, until the sum of the added areas reaches 70% of the total area of the entire crystal grains in the observation image, the average of the grain sizes of the crystal grains of which the areas are added is not more than 15 µm.

4. The titanium alloy sliding bearing of any of claims 1 to 3, wherein the sliding bearing is a spherical sliding bearing comprising an inner ring and an outer ring which are in sliding contact via a lubricative liner.

5. The titanium alloy sliding bearing of claim 4, wherein the lubricative liner is a resin molded body or a resin woven fabric.

6. The titanium alloy sliding bearing of claim 5, wherein the lubricative liner is a molded body of at least one kind of resin selected from polytetrafluoroethylene, polyamide, polyimide, and polyphenylene sulfide.

7. The titanium alloy sliding bearing of claim 5, wherein the lubricative liner is a woven fabric of at least one kind of fiber selected from polytetrafluoroethylene fiber, aromatic polyamide fiber, glass fiber, and polyester fiber.

8. A titanium alloy sliding bearing for use in aerospace devices and instruments, the titanium alloy sliding bearing being the titanium alloy sliding bearing of any of claims 1 to 7.
